(19) **Europäisches Patentamt**
**European Patent Office**
**Office européen des brevets**

(11) **EP 3 186 876 B1**

(12) **EUROPÄISCHE PATENTSCHRIFT**

(45) Veröffentlichungstag und Bekanntmachung des Hinweises auf die Patenterteilung:
**06.05.2020 Patentblatt 2020/19**

(51) Int Cl.:
***H02M 1/42*** *(2007.01)* ***H02M 3/145*** *(2006.01)*

(21) Anmeldenummer: **15753640.0**

(22) Anmeldetag: **05.08.2015**

(86) Internationale Anmeldenummer:
**PCT/EP2015/068047**

(87) Internationale Veröffentlichungsnummer:
**WO 2016/030158 (03.03.2016 Gazette 2016/09)**

(54) **LEISTUNGSFAKTORKORREKTUR MIT ERFASSUNG VON NULLDURCHGÄNGEN**

POWER FACTOR CORRECTION ALLOWING DETECTION OF ZERO CROSSINGS

CORRECTION DU FACTEUR DE PUISSANCE AVEC DÉTECTION DE PASSAGES PAR ZÉRO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2014 DE 102014216827**

(43) Veröffentlichungstag der Anmeldung:
**05.07.2017 Patentblatt 2017/27**

(73) Patentinhaber: **Tridonic GmbH & Co. KG**
**6851 Dornbirn (AT)**

(72) Erfinder: **MARTE, Patrick**
**A-6840 Götzis (AT)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**WO-A1-99/63414   DE-A1-102006 018 577**
**US-A1- 2011 031 942   US-A1- 2011 110 132**

**Beschreibung**

Die vorliegende Erfindung bezieht sich allgemein auf ein Verfahren sowie eine Vorrichtung zur Leistungsfaktorkorrektur (im Englischen PFC, Power Factor Correction). Die Erfindung bezieht sich insbesondere auf sogenannte Hochsetzsteller-Leistungsfaktorkorrektur-Schaltungen, auch Boost-PFC-Schaltungen genannt, und auf Betriebsgeräte für Leuchtmittel wie z.B. LEDs, die derartige Schaltungen aufweisen.

Derartige Schaltungen dienen bekanntermaßen dazu, eine zugeführte DC- oder AC-Spannung auf ein höheres Niveau umzusetzen. Gleichzeitig können derartige Schaltungen dazu ausgelegt sein, einen Leistungsfaktor von nahezu 1 zu gewährleisten, in dem z.B. der von dieser Schaltung entnommene Strom ähnlich wie die Netzspannung einen sinusförmigen Zeitverlauf aufweist.

Solche Hochsetzsteller-Leistungsfaktorkorrektur-Schaltungen sind grundsätzlich bekannt. Eine Ladespule ist dabei mit einer Freilaufdiode in Serie geschaltet, wobei der Verbindungspunkt zwischen der Freilaufdiode und der Ladespule über einen Schalter selektiv mit Masse verbunden werden kann. An der Ladespule liegt typischerweise eine AC- oder DC-Spannung an, die bei geschlossenem Schalter die Ladespule auflädt. Bei geöffnetem Schalter kann dann über die Freilaufdiode ein Ladekondensator aufgeladen werden. Typischerweise wird der Schalter wieder geschlossen, sobald die Ladespule sich komplett entladen hat, d.h. sobald der Strom durch die Ladespule auf Null abgesunken ist. Ein derartiger Betrieb der Leistungsfaktorkorrektur-Schaltung wird Grenzbetrieb oder Borderline Mode bezeichnet.

Die Druckschrift WO 99/63414 A1 offenbart ein verbessertes Leistungsfaktorkorrekturverfahren und eine verbesserte Leistungsfaktorkorrekturvorrichtung; die Druckschrift US 2011/110132 A1 offenbart eine Zeitlimitierungs-Betriebsart (TLM) für einen verschachtelten Leistungsfaktorkorrektur (PFC) Konverter und die Druckschrift US 2011/031942 A1 offenbart ein System und Verfahren zur Reduzierung von Netzstromverzerrung; zum Schluss die Druckschrift DE 10 2006 018577 A1 bezieht sich auf eine Leistungsfaktorkorrektur mit Strommessung und Nulldurchgangfeststellung.

Bei einer geringen Last ist es bereits bekannt, die Leistungsfaktorkorrektur-Schaltung alternativ in dem sogenannten lückenden Betrieb oder Discontinuous Mode zu betreiben. Dabei wird der Schalter nicht beim ersten Nulldurchgang der Spannung über den Schalter sofort wieder eingeschaltet, sondern erst zu einem späteren Zeitpunkt.

Genauer gesagt erfolgt das Wiedereinschalten erst bei dem zweiten oder weiteren Nulldurchgang, wobei diese weiteren Nulldurchgänge durch Schwingungsvorgänge der Ladespule hervorgerufen werden.

Ein Problem ist nunmehr, dass diese besondere Taktung des Schalters eine Erfassung von mehreren Nulldurchgängen innerhalb einer Ausschaltphase erfordert. Da aber die Spannungsschwingung an der Ladespule eine gedämpfte Schwingung ist, wird auch die Amplitude des über eine Sekundärwicklung erfassten Rückführsignals hin zu einer Steuereinheit der Dämpfung folgend abnehmen. Somit besteht die Gefahr, dass die maximale Amplitude der Schwingung unter die Diskriminierungsschwelle für die Erfassung des Nulldurchgangs abfällt. Somit können weitere Nulldurchgänge nicht mehr erfasst werden. Im Extremfall erfolgt dann kein Wiedereinschalten des Schalters.

Der Erfindung liegt deshalb die Aufgabe zugrunde, ein verbessertes Verfahren und eine verbesserte Schaltung mit Leistungsfaktorkorrektur anzugeben, die die vorstehend genannten Nachteile vermeiden.

Gemäß einem ersten Aspekt der Erfindung wird eine Leistungsfaktorkorrektur-Schaltung vorgeschlagen. Diese Schaltung weist die Merkmale von Anspruch 1 auf.

Gemäß einem weiteren Aspekt der Erfindung wird eine Steuereinheit vorgeschlagen in Form einer integrierten Schaltung, insbesondere in Form eines Mikrokontrollers, eines ASICs oder einer Hybridlösung, wobei die Schaltung zur Implementierung des erfindungsgemäßen Verfahrens ausgebildet ist.

Gemäß einem weiteren Aspekt der Erfindung wird ein Betriebsgerät für Lampen vorgeschlagen, insbesondere für LEDs, aufweisend eine erfindungsgemäßen Leistungsfaktorkorrektur-Schaltung.

Der mindestens eine weitere Nulldurchgang kann ausschließlich abhängig von dem ermittelten Zeitabstand und von dem Zeitpunkt des zweiten detektierten Nulldurchgangs ableitbar sein.

Der Zeitpunkt des abgeleiteten Nulldurchgangs kann dadurch ermittelt werden, dass dem Zeitpunkt des zweiten detektierten Nulldurchgangs der Zeitabstand oder ein Mehrfaches des Zeitabstands addiert wird.

Der Zeitabstand kann mittels eines Zählers ermittelt werden, der beim ersten detektierten Nulldurchgang gestartet und beim zweiten detektierten Nulldurchgang angehalten wird. Der Zählerwert zum Zeitpunkt des Anhaltens des Zählers kann in einem Speicher zwischengespeichert werden.

Der Zeitpunkt des abgeleiteten Nulldurchgangs kann dadurch ermittelt werden, dass zum Zeitpunkt des zweiten detektierten Nulldurchgangs der Zähler neu gestartet wird und mindestens einmal bis zum zwischengespeicherten Zählerwert zählt.

Zum Zeitpunkt des abgeleiteten Nulldurchgangs kann der Schalter wieder eingeschaltet werden.

Während einer auf die erste Ausschaltphase folgenden zweiten Ausschaltphase des Schalters kann die Steuereinheit dazu ausgelegt sein, einen Nulldurchgang der an dem Schalter anliegenden Spannung auf Basis der während der ersten Ausschaltphase des Schalters zwei detektierten Nulldurchgänge abzuleiten.

Ein Nulldurchgang der an dem Schalter anliegenden Spannung mittels des Rückführsignals kann dann detektiert werden, wenn das Rückführsignal einen Referenzwert unterschreitet und vorzugsweise wenn noch zum Zeitpunkt des Unterschreitens des Referenzwerts das Rückführsignal eine negative Flanke aufweist.

Die Erfindung schlägt also nun vor, dass in einer Ausschaltphase des Schalters die ersten beiden Nulldurchgänge erfasst werden sowie deren zeitlicher Abstand. Die Zeitpunkte aller weiteren Nulldurchgänge können somit aus dem bekannten zeitlichen Abstand der ersten beiden Nulldurchgänge und der zeitlichen Lage des zweiten Nulldurchgangs weiter extrapoliert werden.

Mit anderen Worten werden zwei Nulldurchgänge mittels eines Rückführsignals detektiert, das direkt (z. B. über Spannungsteiler) oder indirekt (z.B. über eine mit der Ladespule gekoppelte Erfassungsspule) die Spannung über den Schalter bzw. die Spannung über die Ladespule bzw. die Spannung an dem Knotenpunkt zwischen der Ladespule und dem Schalter wiedergibt.

Weiterhin werden weitere Nulldurchgänge ohne Verwendung des Rückführsignals autonom durch die Steuerschaltung bestimmt.

Vorteilhafterweise werden somit diese weiteren Nulldurchgänge bestimmt, auch wenn zu diesem Zeitpunkt das Rückführsignal nicht mehr zur Verfügung steht bzw. unterbrochen ist. Auch bei einer solchen Unterbrechung kann die Steuerschaltung weiterhin das Einschalten des Schalters zu den Zeitpunkten der Nulldurchgänge durchführen. Somit wäre die Autonomie der Extrapolation der Zeitpunkte der weiteren Nulldurchgänge nachgewiesen.

Vorteilhafterweise ist die erfindungsgemäße Taktung des Schalters, in dem verhindert werden kann, dass durch leicht schwankende Wiedereinschaltzeitpunkte störende Schwebungseffekte entstehen, die niederfrequenter Art sein können und somit beispielsweise hörbare Störungen hervorrufen können.

Vorteilhafterweise wird erfindungsgemäß sichergestellt, dass ein stromloses Schalten des Schalters erreicht wird bzw. dass der Schalter zu Zeitpunkten geschaltet wird, bei denen die Spannung über den Schalter Null oder nahezu Null ist. Dies steigert wiederum die Effizienz der Schaltung und vermeidet Verluste.

Vorteilhafterweise ist die erfindungsgemäße Leistungsfaktorkorrektur auch für kleine bzw. sehr kleine Lasten vorgesehen. In der Tat muss der Schalter nicht sofort beim ersten oder zweiten Nulldurchgang wieder eingeschaltet werden. Sondern es können beliebig viele Nulldurchgänge abgewartet werden, bevor der Schalter wieder leitend geschaltet wird. Durch diese zuverlässige Verlängerung der Ausschaltzeitdauer kann somit für eine kleine Last die Energieaufnahme reduziert werden.

Weitere Merkmale, Vorteile und Eigenschaften der vorliegenden Erfindung sollen nunmehr bezugnehmend auf die Figuren der begleitenden Zeichnungen näher erläutert werden.

Fig. 1 zeigt ein Ausführungsbeispiel einer Leistungsfaktorkorrektur-Schaltung gemäß der vorliegenden Erfindung, und

Fig. 2 zeigt Verläufe von verschiedenen in der Schaltung gemäß Fig. 1 auftretenden Signalen.

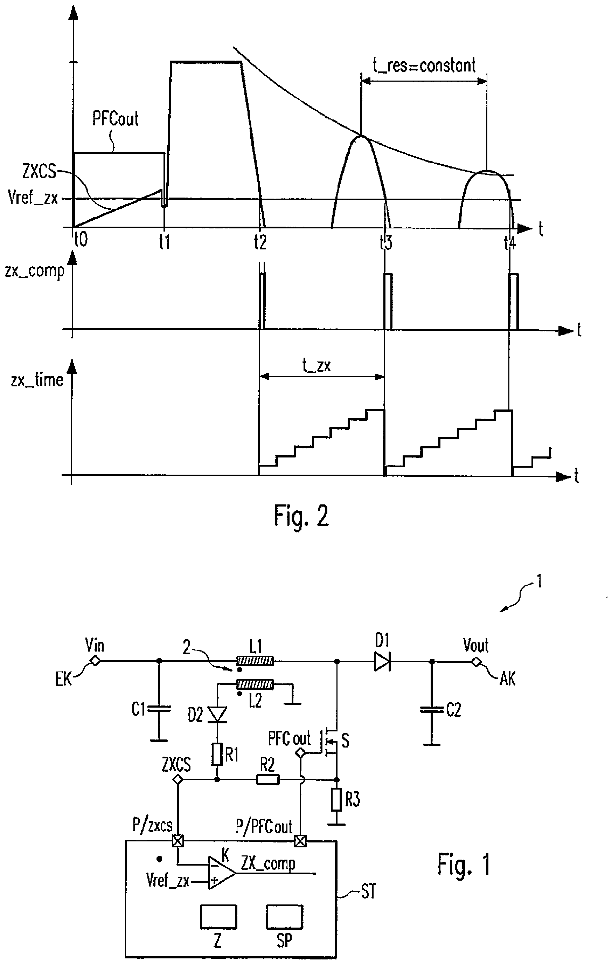

In Fig. 1 ist ein Ausführungsbeispiel einer Leistungsfaktorkorrektur-Schaltung 1 gemäß der vorliegenden Erfindung gezeigt.

Der Leistungsfaktorkorrektur-Schaltung 1 wird an einer Eingangsklemme EK eine Eingangsspannung Vin z.B. in Form einer AC- oder DC-Spannung zugeführt. Die Eingangsspannung Vin kann eine von einem Gleichrichter (nicht gezeigt) gleichgerichtete Netzspannung sein und entsprechend eine Frequenz von typischerweise 100 Hz aufweisen. Der Eingang der Schaltung 1 ist von der Eingangsklemme EK und Masse gebildet. Die Eingangsspannung Vin wird optional von einem am Eingang der Leistungsfaktorkorrektur-Schaltung 1 angeordneten Glättungskondensator C1 gesiebt. Der Glättungskondensator C1 ist zwischen der Eingangsspannung Vin bzw. der Eingangsklemme EK und Masse geschaltet. Ausgangsseitig stellt die Leistungsfaktorkorrektur-Schaltung 1 an einer Ausgangsklemme AK eine Ausgangsspannung Vbus bereit. Der Ausgang der Schaltung 1 ist von der Ausgangsklemme AK und Masse gebildet.

Zwischen der Eingangsklemme EK und der Ausgangsklemme AK ist eine Reihenschaltung eines induktiven Energiespeicherelements, wie z.B. einer Ladespule L1, und einer Freilaufdiode D1 vorgesehen. Wie in Fig. 1 gezeigt, liegt die Eingangsspannung Vin an einer ersten Klemme der Ladespule L1, wobei eine zweite Klemme der Ladespule L1 mit der Anode der Freilaufdiode D1 verbunden ist. Zwischen der Kathode der Freilaufdiode D1 und Masse, d.h. zwischen der Ausgangsklemme AK und Masse, ist wiederum ein Ladekondensator C2 geschaltet. Dieser Ladekondensator C2 kann über die Freilaufdiode D1 von der Ladespule L1 geladen werden.

Am Verbindungspunkt zwischen Ladespule L1 und Freilaufdiode D1 ist ein steuerbarer Schalter S angeschlossen. Der Schalter S ist vorzugsweise als Leistungstransistor ausgebildet. Mittels des Schalters S kann dieser Verbindungspunkt zwischen Ladespule L1 und Freilaufdiode D1 selektiv mit Masse verbunden werden. Die in diesem Ausführungsbeispiel erwähnte Masse soll allgemein ein Niedrigpotential darstellen.

Die Leistungsfaktorkorrektur-Schaltung umfasst weiterhin eine Steuereinheit ST, die über Ein- und Ausschalten des Schalters S an der Ausgangsklemme AK eine vorzugsweise konstante Ausgangsspannung Vbus bereitstellt. Die Steuereinheit ST weist einen Pin P/PFCout auf, über den ein Steuersignal PFCout für den Schalter S erzeugt wird. Bekanntermaßen kann der Schalter mit einer Frequenz größer als 1 kHz bzw. größer als 10 kHz ein- und ausgeschaltet werden. Daraus ergibt sich, dass die Eingangsspannung Vin während einer Einschaltphase und einer folgenden Ausschaltphase des Schalters vorzugsweise nahezu konstant ist.

Die Steuereinheit ST kann auch die Eingangsspannung Vin und/oder die Ausgangsspannung Vout erfassen, z.B. über jeweilige Spannungsteiler.

Bekanntermaßen kann die Ausgangsspannung Vbus z.B. über einen Wechselrichter (nicht gezeigt) mit zwei Schaltern in eine hochfrequente Betriebsspannung für einen Lastkreis umgesetzt werden. Leuchtmittel und insbesondere LEDs sind Teil des Lastkreises.

Die Ladespule L1 bildet auch die Primärwicklung eines Übertragers 2, dessen Sekundärwicklung als Erfassungsspule L2 bezeichnet wird. Die Ladespule L1 und die Erfassungsspule L2 sind also induktiv gekoppelt, so dass der Strom durch die Ladespule L1 bzw. die Spannung an der Ladespule L1 über die Erfassungsspule L2 induktiv von der Steuereinheit ST abgegriffen werden kann. Entsprechend ist ein Widerstand R1 und vorzugsweise auch ein Entkopplungselement wie z.B. eine Diode D2 vorgesehen. Eine Klemme der Erfassungsspule L2 ist mit Masse verbunden, die andere Klemme der Erfassungsspule L2 mit der Anode der Diode D2. Der Widerstand R1 ist zwischen der Kathode der Diode D2 und einem Erfassungspin P/zxcs der Steuereinheit ST geschaltet.

Zu Zeitdauern, zu denen der Schalter S geöffnet wird, kann also an dem Erfassungspin P/zxcs der Nulldurchgang der Spannung über die Ladespule bzw. der Nulldurchgang des durch die Ladespule L1 fließenden Stroms erfasst werden. Durch diese Erfassung der Spannung über die Ladespule L1 wird auch indirekt die Spannung über den Schalter S erfasst.

Zu Zeitdauern, in denen der Schalter S wie durch die Steuereinheit ST angesteuert geschlossen ist, kann an diesem Erfassungspin P/zxcs über einen Messwiderstand R3 der Strom durch den Schalter gemessen werden. Dieser vorzugsweise niederohmige Messwiderstand R3 ist zwischen Masse und dem Schalter S geschaltet, so dass bei geschlossenem Schalter S ein Strom durch die Ladespule L1, den Schalter S und den Messwiderstand R3 fließt. Zwischen dem Erfassungspin P/zxcs und dem Verbindungspunkt zwischen Messwiderstand R3 und Schalter S kann ein weiterer Widerstand R2 geschaltet sein.

Das z.B. in Fig. 1 als Diode D2 ausgestaltete Entkoppelelement dient somit zur Entkopplung der beiden am Erfassungspin P/zxcs durchgeführten Funktionen: Messung des Nulldurchgangs der Spannung über die Ladespule bzw. des Stroms durch die Ladespule L1 einerseits und Messung des Stroms durch den Schalter S andererseits.

Alternativ können diese zwei Messungen mittels zwei separaten Erfassungspins der Steuereinheit ST durchgeführt werden, wobei diese zwei separaten Erfassungspins dann unterschiedliche Potentiale aufweisen können. Ein erster Erfassungspin kann zur Erfassung des Nulldurchgangs über den Widerstand R1 mit der Erfassungsspule L2 verbunden sein. Ein separater zweiter Pin kann mit dem Verbindungspunkt zwischen Widerstand R3 und Schalter S vorgesehen sein. Vorzugsweise entfällt hier die in Fig. 1 gezeigte Verbindung zwischen den Widerständen R3 und R2.

In Fig. 2 sind Verläufe der verschiedenen in der Schaltung gemäß Fig. 1 auftretenden Signale dargestellt.

Das gezeigte Signal PFCout ist dabei das von der Steuereinheit ST ausgegebene Steuersignal zum Ansteuern des Schalters S. Das Steuersignal PFCout weist bekanntermaßen Schaltimpulse auf, während derer der Schalter S eingeschaltet ist. Ein derartiger Schaltimpuls ist zwischen den Zeitpunkten t0 und t1 gezeigt. Das in Fig. 2 gezeigte Steuersignal bleibt nach dem Zeitpunkt t1 auf Null.

Das gezeigte Signal ZXCS ist das Signal bzw. die Spannung am Erfassungspin P/zxcs. Zum Zeitpunkt t0 wird der Schalter S geschlossen, wobei dieser Schalter S dann während der Zeitdauer t0-t1 eingeschaltet bleibt.

Bei der als Hochsetzstelle ausgebildeten Leistungsfaktorkorrektur-Schaltung 1 nimmt die Ladespule 1 bei geschlossenem Schalter S Energie auf, die wiederum bei geöffnetem Schalter S an den Ladekondensator C2 abgegeben wird. Wenn der Schalter S geschlossen ist, ist die Ladespule L1 gegen Masse kurzgeschlossen und die Freilaufdiode D1 bleibt gesperrt. Die Ladespule L1 lädt sich dann auf und Energie wird dadurch in der Ladespule L1 gespeichert. Wenn anschließend der Schalter S ausgeschaltet ist, ist die Freilaufdiode D1 leitend. Die Ladespule L1 entlädt sich dann über die Freilaufdiode D1 in den Ladekondensator C2. Die in der Ladespule L1 zuvor gespeicherte Energie wird dadurch an den Ladekondensator C2 bzw. an die Ausgangsklemme AK übertragen.

Das Aufladen der Ladespule L1 während der Zeitdauer t0-t1 ist in Fig. 2 dahingehend gezeigt, dass in diesem Zeitfenster das Erfassungssignal ZXCS linear von Null auf einen positiven Wert ansteigt. Dies entspricht einem linearen Anstieg des Stroms durch den Schalter S, d.h. auch des Stroms durch die Ladespule L1, ausgehend vom Wert Null.

Zum Zeitpunkt t1 wird der Schalter S geöffnet, so dass das Signal ZXCS nunmehr mittels des Spannungsteilers R1, R2, R3 die an der Erfassungsspule L2 anliegende Spannung wiedergibt. Durch die induktive Kopplung mit der Ladespule L1 kann das Signal ZXCS auch die an der Ladespule L1 anliegende Spannung wiedergeben. Das erfasste Signal ZXCS wird vorzugsweise von der Steuereinheit mit einem Referenzwert Vref_zx verglichen. Zu diesem Zweck ist in Fig. 1 ein Komparator K, der zum Vergleichen des Erfassungssignals ZXCS mit dem Referenzwert Vref_zx dient, gezeigt.

Nach dem Ausschalten des Schalters S zum Zeitpunkt t1 verbleibt die Spannung an der Erfassungsspule L2 auf einen positiven Wert bis zum Nulldurchgang der Spannung über die Ladespule. Während der Ausschaltzeitdauer des Schalters S wird der Referenzwert Vref_zx zum Zeitpunkt t2 zum ersten Mal vom Erfassungssignal ZXCS unterschreiten. Es wird entsprechend von der Steuereinheit ST erkannt, dass zum Zeitpunkt t2 ein Nulldurchgang der Spannung über die Ladespule erfolgt.

Erfindungsgemäß nimmt der Ausgang ZX_comp des Komparators K einen positiven Wert an, sobald und solange das Erfassungssignal ZXCS den Referenzwert Vref_zx unterschreitet. Eine positive Flanke des Ausgangs ZX_comp wird entsprechend von der Steuereinheit ST als Nulldurchgang der Spannung über die Ladespule erkannt.

Wie in Fig. 2 gezeigt, kann es vorkommen, dass unmittelbar nach dem zum Zeitpunkt t1 durchgeführten Ausschalten des Schalters S das ansteigende Erfassungssignal ZXCS kleiner als der Referenzwert Vref_zx ist. Diese Unterschreitung wird zur Erkennung des ersten Nulldurchgangs der Spannung über die Ladespule allerdings nicht berücksichtigt. Dies kann z.B. gewährleistet werden, in dem zur Erkennung eines Nulldurchgangs auch eine negative Flanke des Erfassungssignals ZXCS vorliegen muss. Zu den Zeitpunkten t1 und t2 ist das Erfassungssignal ZXCS kleiner als der Referenzwert Vref_zx. Zu diesen Zeitpunkten weist das Erfassungssignal ZXCS allerdings jeweils eine positive und eine negative Flanke auf. Da vorzugsweise nur negative Flanken bei der Erkennung eines Nulldurchgangs berücksichtigt werden, erkennt die Steuereinheit ST, dass nach Ausschalten des Schalters S der erste Nulldurchgang der Spannung über die Ladespule tatsächlich zum Zeitpunkt t2 erfolgt ist.

Erfindungsgemäß ist nunmehr vorgesehen, dass von der Steuereinheit ST ein erster Nulldurchgang bei t2 und ein zweiter Nulldurchgang der Spannung über die Ladespule bei t3 detektiert werden. Abhängig von diesen zwei detektierten Nulldurchgängen bei t2 und t3 werden die weiteren Nulldurchgänge bei t4 usw. abgeleitet.

Vorzugsweise wird dabei der Zeitabstand t_zx zwischen den zwei detektierten Nulldurchgängen ermittelt. Abhängig von dem ermittelten Zeitabstand t_zx werden dann die weiteren Nulldurchgänge bei t4 usw. abgeleitet. Z.B. wird der Zeitpunkt t4 des dritten Nulldurchgangs von der Steuereinheit ST durch folgende Formel ermittelt:

$$t4 = t3 + t\_zx,$$

der Zeitpunkt t5 des vierten Nulldurchgangs (nicht gezeigt) durch folgende Formel:

$$t5 = t3 + 2*t\_zx,$$

usw.

Vorzugsweise können also weitere Nulldurchgänge ausschließlich abhängig von dem ermittelten Zeitabstand t_zx und von dem Zeitpunkt t3 des zweiten detektierten Nulldurchgangs abgeleitet werden.

Dies beruht auf der Tatsache, dass die Schwingung der Spannung in der Ausschaltphase gedämpft ist, indessen aber eine konstante Frequenz 1/(t_res) aufweist.

Beim Stand der Technik wird sozusagen diese Konstanz der Schwingung als Taktsignal verwendet, um beim lückenden Betrieb eine höhere Effizienz zu erreichen. Gemäß der vorliegenden Erfindung werden indessen nach dem Erfassen des zeitlichen Abstands t_zx der beiden ersten Nulldurchgänge die weiteren Nulldurchgänge unabhängig vom Rückführsignal zxcs ermittelt.

Erfindungsgemäß wird für die Ermittlung der weiteren Nulldurchgänge ein separater Taktgenerator verwendet.

Vorzugsweise wird der Zeitabstand t_zx mittels eines Zählers Z ermittelt. Dieser vorzugsweise digitale Zähler ist vorzugsweise Teil der Steuereinheit ST. In einer bevorzugten Ausführungsform wird beim ersten detektierten Nulldurchgang ein Zähler gestartet und der Zählerwert zx_time zum Zeitpunkt des zweiten detektierten Nulldurchgangs festgehalten. Der Zählerwert gibt somit bei konstanter Taktung des Zählers den zeitlichen Abstand t_zx der beiden ersten Nulldurchgänge wieder.

Der Verlauf des Zählerwerts ist in Fig. 2 gezeigt. Bei der Detektion des ersten Nulldurchgangs zum Zeitpunkt t2 beginnt der Zähler ausgehend vom Wert Null hochzuzählen. Bei der Detektion des zweiten Nulldurchgangs zum Zeitpunkt t3 wird der Zähler angehalten und der Zählerwert zx_time wird in einem Speicher SP gespeichert.

Sämtliche weitere Nulldurchgänge können dann durch Rücksetzen des Zählers beim zweiten Nulldurchgang und Hochlaufenlassen bis zu dem Zählerwert festgestellt werden. Der Zählerwert des Zählers Z wird also mit dem zuvor gespeicherten Zählerwert verglichen. Sobald zum Zeitpunkt t4 der Zählerwert des Zählers Z den zuvor gespeicherten Wert erreicht, kann die Steuereinheit ST einen weiteren Nulldurchgang feststellen bzw. ableiten.

Dieser Vorgang kann natürlich beliebig oft wiederholt werden, d.h. sobald ein weiterer Nulldurchgang abgeleitet wird, wird der Zähler erneut gestartet und bis zum gespeicherten Zählerwert laufen gelassen.

Der Schalter S wird dann zum Zeitpunkt eines abgeleiteten Nulldurchgangs wieder geschlossen, d.h. zum Zeitpunkt t3 + N*t_zx, wobei N eine natürliche Zahl ist.

Somit kann insbesondere bei sehr geringen Lasten auch eine verhältnismäßig große Lücke, d.h. ein verhältnismäßig großer zeitlicher Abstand zwischen dem ersten Nulldurchgang und dem Wiedereinschalten des Schalters S, verwendet werden.

Der gespeicherte Zählerwert, der den zeitlichen Abstand t_zx zwischen den zwei ersten detektierten Nulldurchgängen einer Ausschaltphase widergibt, kann auch für folgende Ausschaltphasen des Schalters verwendet werden. Bei einem alternierenden Ein- und Ausschalten des Schalters S muss also nur einmal der Abstand t_zx ermittelt werden.

Die vorliegende Erfindung kommt nur zur Anwendung beim lückenden Betrieb (Discontinuous Conduction Mode) einer Leistungsfaktorkorrektur-Schaltung 1. Die Steuereinheit ST der Leistungsfaktorkorrektur-Schaltung 1 kann aber adaptiv dahingehend ausgestaltet sein, dass sie insbesondere bei höheren Lasten auf den Borderline-Modus (Grenzbetrieb) bzw. den Continuous Conduction Mode umschaltet. Im Grenzbetrieb wird der Schalter S vorzugsweise beim ersten detektierten Nulldurchgang der Spannung über der Ladespule L1, d.h. beim ersten detektierten Nulldurchgang des Ladespulenstroms wieder eingeschaltet. Im Continuous Conduction Mode variiert der Ladespulenstrom zwischen zwei positiven Werten, d.h. der Ladespulenstrom kommt nicht auf Null zurück.

**Patentansprüche**

1. Leistungsfaktorkorrektur-Schaltung (1) nur zur Anwendung beim lückenden Betrieb, wobei die Schaltung eine mit einer Freilaufdiode (D1) in Serie geschaltete Ladespule ($L_1$) aufweist, mit deren Entladestrom durch einen gesteuerten Schalter (S) ein Ladekondensator (C2) aufgeladen wird, wobei ein Verbindungspunkt zwischen der Freilaufdiode (D1) und der Ladespule (L1) über den Schalter (S) selektiv mit Masse verbunden werden kann, wobei die Schaltung eine Steuereinheit (ST) aufweist, wobei der Schalter (S) durch die Steuereinheit (ST) alternierend ein- und ausschaltbar ist und die Steuereinheit (ST) einen Eingang (P/zxcs) zum Empfangen eines Rückführsignals (ZXCS), das direkt oder indirekt die an dem Schalter (S) bzw. an der Ladespule (L1) anliegende Spannung wiedergibt, aufweist, **dadurch gekennzeichnet, dass** die Steuereinheit (ST) während einer ersten Ausschaltphase des Schalters (S) dazu ausgelegt ist,

   - zwei Nulldurchgänge der an dem Schalter (S) anliegenden Spannung mittels des Rückführsignals (ZXCS) zu detektieren und
   - mindestens einen weiteren Nulldurchgang der an dem Schalter (S) anliegenden Spannung auf Basis der zwei detektierten Nulldurchgänge abzuleiten,

   wobei die Steuereinheit (ST) bei ausgeschaltetem Schalter (S) dazu ausgelegt ist,

   - den Zeitabstand (t_zx) zwischen den zwei detektierten Nulldurchgängen zu ermitteln und
   - den mindestens einen weiteren Nulldurchgang abhängig von dem ermittelten Zeitabstand (t_zx) abzuleiten,

   wobei ein Nulldurchgang der an dem Schalter (S) anliegenden Spannung mittels des Rückführsignals (ZXCS) dann detektiert wird, wenn das Rückführsignal (ZXCS) einen Referenzwert (Vref_zx) unterschreitet.

2. Leistungsfaktorkorrektur-Schaltung (1) gemäß Anspruch 1, wobei der mindestens eine weitere Nulldurchgang ausschließlich abhängig von dem ermittelten Zeitabstand (t_zx) und von dem Zeitpunkt ($t_3$) des zweiten detektierten Nulldurchgangs abgeleitet wird.

3. Leistungsfaktorkorrektur-Schaltung (1) gemäß Anspruch 1 oder 2, wobei der Zeitpunkt ($t_4$) des abgeleiteten Nulldurchgangs dadurch ermittelt wird, dass dem Zeitpunkt ($t_3$) des zweiten detektierten Nulldurchgangs der Zeitabstand (t_zx) oder ein Mehrfaches des Zeitabstands (t_zx) addiert wird.

4. Leistungsfaktorkorrektur-Schaltung (1) gemäß einem der Ansprüche 1 bis 3, wobei der Zeitabstand (t_zx) mittels eines Zählers (Z) ermittelt wird, der beim ersten detektierten Nulldurchgang gestartet und beim zweiten detektierten Nulldurchgang angehalten wird, wobei der Zählerwert (zx_time) zum Zeitpunkt des Anhaltens des Zählers in einem Speicher zwischengespeichert wird.

5. Leistungsfaktorkorrektur-Schaltung (1) gemäß Anspruch 4, wobei der Zeitpunkt ($t_4$) des abgeleiteten Nulldurchgangs dadurch ermittelt wird, dass zum Zeitpunkt ($t_3$) des zweiten detektierten Nulldurchgangs der Zähler (Z) neu gestartet wird und mindestens einmal bis zum zwischengespeicherten Zählerwert (zx_time) zählt.

6. Leistungsfaktorkorrektur-Schaltung (1) gemäß einem der vorigen Ansprüche, wobei zum Zeitpunkt ($t_4$) des abgeleiteten Nulldurchgangs der Schalter (S) wieder eingeschaltet wird.

7. Leistungsfaktorkorrektur-Schaltung (1) gemäß einem der vorigen Ansprüche, wobei während einer auf die erste Ausschaltphase folgenden zweiten Ausschaltphase des Schalters (S) die Steuereinheit (ST) dazu ausgelegt ist, einen Nulldurchgang der an dem Schalter (S) anliegenden Spannung auf Basis der während der ersten Ausschaltphase des Schalters (S) zwei detektierten Nulldurchgänge abzuleiten.

8. Leistungsfaktorkorrektur-Schaltung (1) gemäß Anspruch 1, wobei ein Nulldurchgang der an dem Schalter (S) anliegenden Spannung mittels des Rückführsignals (ZXCS) dann detektiert wird, wenn zusätzlich zum Zeitpunkt des Unterschreitens des Referenzwerts (Vref_zx) das Rückführsignal (ZXCS) eine negative Flanke aufweist.

9. Betriebsgerät für Lampen, insbesondere für LEDs, aufweisend eine Leistungsfaktorkorrektur-Schaltung (1) nach einem der Ansprüche 1 bis 8.


**Claims**

1. A power factor correction circuit (1) only for application in discontinuous operation, wherein the circuit has a charging coil (L1) connected in series to a freewheeling diode ($D_1$), a charging capacitor ($C_2$) is charged with the discharge current of said charging coil by a controlled switch (S), wherein a connection point between the freewheeling diode ($D_1$) and the charging coil (L1) can be connected selectively with ground via the switch (S),
wherein the circuit has a control unit (ST), wherein the switch (S) can be alternately switched on and off by the control unit (ST) and the control unit (ST) has an input (P/zxcs) for receiving a feedback signal (ZXCS), which reflects directly or indirectly the voltage applied to the switch (S) or to the charging coil ($L_1$), **characterized in that**
the control unit (ST) is designed during a first switch-off phase of the switch (S),

   - to detect two zero crossings of the voltage applied to the switch (S) by means of the feedback signal (ZXCS) and
   - to derive at least one further zero crossing of the voltage applied to the switch (S) on the basis of the two detected zero crossings,

wherein the control unit (ST) is designed when the switch (S) is switched off,

   - to determine the time interval (t_zx) between the two detected zero crossings and
   - to derive the at least one further zero crossing as a function of the determined time interval (t_zx),

wherein a zero crossing of the voltage applied to the switch (S) is detected by means of the feedback signal (ZXCS) when the feedback signal (ZXCS) falls below a reference value (Vref_zx).

2. The power factor correction circuit (1) according to Claim 1,
wherein the at least one further zero crossing is derived exclusively as a function of the determined time interval (t_zx) and of the time ($t_3$) of the second detected zero crossing.

3. The power factor correction circuit (1) according to Claim 1 or 2,
wherein the time ($T_4$) of the derived zero crossing is determined by adding the time interval (t_zx) or a multiple of the time interval (t_zx) to the time ($t_3$) of the second detected zero crossing.

4. The power factor correction circuit (1) according to any one of Claims 1 to 3,
wherein the time interval (t_zx) is determined by means of a counter (Z), which is started at the first detected zero crossing and is stopped at the second detected zero crossing, wherein the counter value (zx_time) at the time when the counter stops is intermediately stored in a memory.

5. The power factor correction circuit (1) according to Claim 4,
wherein the time ($t_4$) of the derived zero crossing is determined by restarting the counter (Z) at the time ($t_3$) of the second detected zero crossing and by counting at least once up to the intermediately stored counter value (zx_time).

6. The power factor correction circuit (1) according to any one of the preceding claims,
wherein the switch (S) is switched on again at the time ($t_4$) of the derived zero crossing.

7. The power factor correction circuit (1) according to any one of the preceding claims,
wherein during a second switch-off phase of the switch (S) following the first switch-off phase the control unit (ST) is designed to derive a zero crossing of the voltage applied to the switch (S) on the basis of the two detected zero crossings during the first switch-off phase of the switch (S).

8. The power factor correction circuit (1) according to Claim 1,
wherein a zero crossing of the voltage applied to the switch (S) is detected by means of the feedback signal (ZXCS), when in addition the feedback signal (ZXCS) has a negative edge at the time when it falls below the reference value (Vref_zx).

9. An operating device for lamps, in particular, for LEDs, having a power factor correction circuit (1) according to any one of Claims 1 to 8.


**Revendications**

1. Circuit de correction de facteur de puissance (1), destiné à être utilisé uniquement lors d'un dysfonctionnement, dans lequel le circuit comprend une bobine de charge ($L_1$), branchée en série avec une diode de roue libre ($D_1$), avec le courant de décharge de laquelle, à l'aide d'un commutateur contrôlé (S), un condensateur de charge ($C_2$) est chargé, dans lequel un point de liaison entre la diode de roue libre ($D_1$) et la bobine de charge ($L_1$) peut être relié de manière sélective avec la masse par l'intermédiaire du commutateur (S), dans lequel le circuit comprend une unité de commande (ST), dans lequel le commutateur (S) peut être activé et désactivé alternativement par l'unité de commande (ST) et l'unité de commande (ST) comprend une entrée (P/zxcs) pour la réception d'un signal de retour (ZXCS), qui reproduit directement ou indirectement la tension appliqué au commutateur (S) resp. à la bobine de charge ($L_1$),
**caractérisé en ce que**
l'unité de commande (ST) est conçue, pendant une première phase de désactivation du commutateur (S) pour

- détecter, au moyen du signal de retour (ZXCS), deux passages à zéro de la tension appliquée au commutateur (S) et
- déduire au moins un autre passage à zéro de la tension appliquée au commutateur (S) sur la base des deux passages à zéro détectés,

l'unité de commande (ST) est conçue, lorsque le commutateur (S) est désactivé, pour

- déterminer l'intervalle de temps (t_zx) entre les deux passages à zéro détectés et
- déduire l'au moins un autre passage à zéro en fonction de l'intervalle de temps (t_zx) déterminé,

dans lequel un passage à zéro de la tension appliquée au commutateur (S) est détectée au moyen du signal de retour (ZXCS) lorsque le signal de retour (ZXCS) passe en dessous d'une valeur de référence (Vref_zx).

2. Circuit de correction de facteur de puissance (1) selon la revendication 1,
dans lequel l'au moins un autre passage à zéro est déduit exclusivement en fonction de l'intervalle de temps (t_zx) déterminé et du moment (t3) du deuxième passage à zéro détecté.

3. Circuit de correction de facteur de puissance (1) selon la revendication 1 ou 2,
le moment (t4) du passage à zéro déduit est déterminé en ajoutant au moment (t3) du deuxième passage à zéro détecté l'intervalle de temps (t_zx) ou un multiple de l'intervalle de temps (t_zx).

4. Circuit de correction de facteur de puissance (1) selon l'une des revendications 1 à 3,
dans lequel l'intervalle de temps (t_zx) est déterminé au moyen d'un compteur (Z) qui est démarré lors du premier passage à zéro détecté et qui est arrêté lors du deuxième passage à zéro détecté, dans lequel la valeur du compteur (zx_time) au moment de l'arrêt du compteur est enregistrée dans une mémoire.

5. Circuit de correction de facteur de puissance (1) selon la revendication 4,
dans lequel le moment (t4) du passage à zéro déduit est déterminé grâce au fait qu'au moment (t3) du deuxième passage à zéro détecté, le compteur (Z) est redémarré et compte au moins une fois jusqu'à la valeur de compteur (zx_time) enregistrée.

6. Circuit de correction de facteur de puissance (1) selon l'une des revendications précédentes,
dans lequel, au moment (t4) du passage à zéro déduit, le commutateur (S) est à nouveau activé.

7. Circuit de correction de facteur de puissance (1) selon l'une des revendications précédentes,
dans lequel, pendant une deuxième phase de désactivation, suivant la première phase de désactivation, du commutateur (S), l'unité de commande (ST) est conçue pour déduire un passage à zéro de la tension appliqué au commutateur (S) sur la base de deux passages à zéro détectés pendant la première phase de désactivation du commutateur (S).

8. Circuit de correction de facteur de puissance (1) selon la revendication 1,
dans lequel un passage à zéro de la tension appliquée au commutateur (S) est détecté au moyen du signal de retour (ZXCS) lorsqu'en outre, au moment du passage en dessous de la valeur de référence (Vref_zx), le signal de retour (ZXCS) présente un flanc négatif.

9. Appareil de commande pour lampes, plus particulièrement pour des LED, comprenant un circuit de correction de facteur de puissance (1) selon l'une des revendications 1 à 8.

Fig. 2

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9963414 A1
- US 2011110132 A1
- US 2011031942 A1
- DE 102006018577 A1